# EUROPEAN PATENT APPLICATION

(11) **EP 1 039 735 A2**
(43) Date of publication of application: **27.09.2000**
(21) Application number: 00300495.9
(22) Date of filing: 24.01.2000
(51) Int. Cl.: H04M 7/00, H04M 3/42

(54) **On-line call management**

(30) Priority: 22.03.1999 US 274054
(71) Applicant: AT&T Corp., New York, NY 10013-2412 (US)
(72) Inventor: Burg, Frederick Murray, County of Monmouth, New Jersey 07764 (US)
(74) Representative: Asquith, Julian Peter

(57) **Abstract**

The system includes a computer adapted to conduct voice-over-data-protocol telephone calls, typically voice over Internet Protocol. Alternatively, the computer is adapted to conduct multi-media-over-data-protocol calls. The computer is connected to an on-line data service such as by a dial-up telephone connection. While on-line, a user at the computer is able to conduct telephone or multi-media calls with a voice-over-data-protocol or multi-media-over-data-protocol respectively. The user is able to place the call on hold, without disconnecting the call and perform other actions, such as performing on-line activities, or taking a second voice or multi-media call. The party placed on hold is informed of the hold action. The hold function is typically invoked by the computer and performed at a gateway, though hold at the computer and invoke by the non-computer party are alternatives. A set-top-box is considered a computer within the scope of the invention.

## Description

### Field of the Invention

The invention relates generally to the field of call management and more specifically to the field of call management using voice-ova-data-protocol, and multi-media-over-data-protocol.

### Background of the Invention

In the field of voice telephony, call hold is known. In some applications, the hold function is activated and implemented at the end-user equipment. An example is the hold function provided with a two line telephone instrument, where a user presses a button on the instrument, placing one call on hold, and taking a second call on a second line. In this example the hold function is accomplished when the telephone instrument maintains an off-hook condition for the held line, thereby keeping the telephone central office from terminating the held call. This example is common in the small office and home environment.

In another example, typical in a larger office environment, a PBX system routes calls to individual telephone instruments and a user, depressing a hold button on the telephone instrument causes the PBX to maintain a line connection to the held call, allowing the user to take a call on a second line. Functionally, this example and the small office or home example are similar. The call from the telephone central office to the customer location is connected and maintained for the duration of the call and any hold. It is also possible that PBX system provides multiple lines for the same telephone number, and routes the calls on the multiple lines to an individual telephone instrument. A hold function can be implemented at the PBX or at the individual telephone instrument.

In another example, typical in the home environment, a user has a single telephone line and number with a call-waiting service. When the user is engaged in a call on the line, the central office receives a second call to the number and places an alerting signal on the line to the user, the alerting signal is commonly termed a call-waiting signal. When the user detects the call-waiting alerting signal, they can place the current call on hold and take the second call. This hold function is accomplished by a user action that signals the telephone central office that the user wants to place the current call on hold and wants the second call connected. In this example, the telephone central office maintains the connection to the held call, but removes the held call from the line to the user and places the new call on the line. In this example the hold function is performed at the telephone central office, not at the user premises.

It is also known to use a computer, such as a personal computer, to connect to on-line data services using a MODEM and a telephone line or dial-up connection. In this configuration, the personal computer and MODEM take control of the user telephone line for the duration of the on-line connection. When on-line with a data connection, without other provisions or services, the user telephone line is generally unavailable for voice telephony. Many of the optional telephony services, such as call waiting, caller ID and call hold, are unavailable or must be temporarily disabled to maintain data connection quality. To alleviate some of these problems Internet Call Waiting, as described in U.S. Patent No. 5,805,587 to Norris et. al. (the '587 patent) provides some of these services to on-line users. For example, the on-line user is informed of a call while on-line and can respond appropriately to the call, such as by taking the call, or sending the call to voice-messaging. However, the '587 patent does not disclose a method where an on-line user is able to place one voice-call on hold and take or respond to another call. Similarly, using the '587 patent disclosure, an on-line user is still not able to place one voice-call on hold to regain full bandwidth of the connection while performing on-line functions, without disconnecting the telephone call. There is a need to provide these and other telephony services to on-line users.

### SUMMARY OF THE INVENTION

In one embodiment, the system includes a computer configured for voice-over-data-protocol telephony, which computer is connected to an on-line data service. While on-line, a user is able to conduct voice-over-data-protocol telephone calls. The protocol is normally Internet Protocol (IP). While on-line, the user is also able to place the voice-over-data-protocol call on hold without the call being terminated. While this first call is on hold, the user may conduct other activities such as conducting a second voice-over-data-protocol call over the on-line connection.

In another embodiment, the user computer is a multi-media computer and the call is a multi-media call to another multi-media computer. While on-line, the user is able to place one multi-media call on hold and take a second multi-media call.

In another embodiment, the user computer is a set-top-box in an entertainment / information system and the call is a voice-over-data-protocol call. While on-line, the user is able to place one voice-over-data-protocol call on hold and take a second voice-over-data-protocol call.

It is thus an advantage of the invention to allow an on-line user to place one call on hold and perform actions while that call is on hold, without disconnecting or hanging up on the call.

The foregoing specific objects and advantages of the invention are illustrative of those which can be achieved by the present invention and are not intended to be exhaustive or limiting of the possible advantages which can be realized. Thus, the objects and advantages of this invention will be apparent from the description herein or can be learned from practicing the invention, both as embodied herein or as modified in view of any variations which may be apparent to those skilled in the art. Accordingly, the present invention resides in the novel parts, constructions, arrangements, combinations and improvements herein shown and described.

### BRIEF DESCRIPTION OF THE FIGURES

The foregoing features and other aspects of the invention are explained in the following description taken in connection with the accompanying drawings wherein:
FIG. 1 illustrates a block diagram of a first embodiment of the system of the invention;
FIG. 2 illustrates a flow diagram of an embodiment of the method of the invention; and
FIG. 3 illustrates a block diagram of a second embodiment of the system of the invention.

It is understood that the figures are for illustration only and are not limiting.

### DETAILED DESCRIPTION OF THE INVENTION

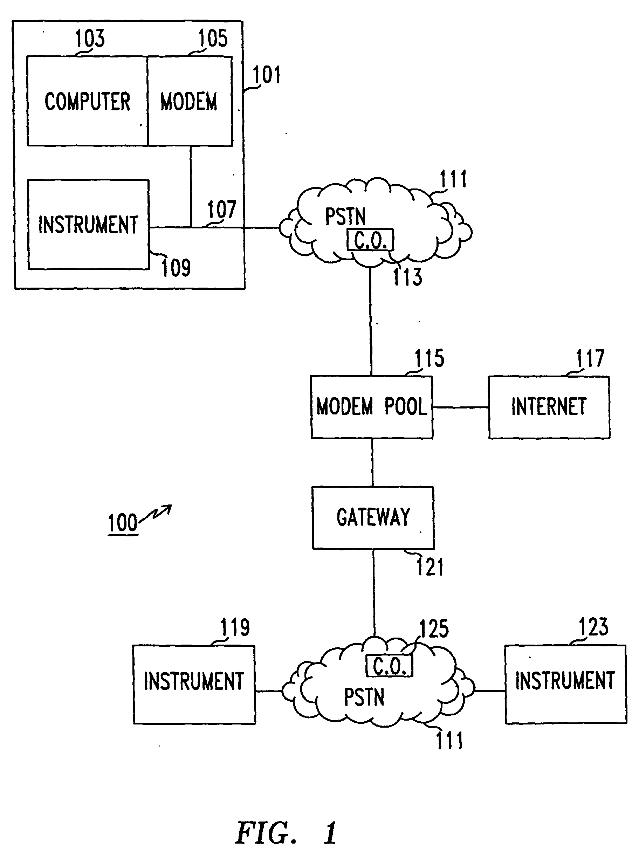

Referring to FIG. 1, system 100 of the invention includes user station 101, which further includes computer 103 and connected MODEM 105. Computer 103 is a typical desktop or laptop type computer with internal volatile and non-volatile memory, processors, and data input/output devices. Data storage and transfer devices such as disk drives are part of computer 103. Computer 103 also includes a sound card, microphone and speakers. It one embodiment computer 103 has a video card and video capture capabilities. MODEM 105 has a telephone line connection, such as an RJ-11 connection, allowing connection to a user telephone line 107. Telephone line 107 is a typical telephone line and includes twisted pair, coaxial and fiber optic lines. Also at user station 101 is a telephone instrument 109, which is also connected to telephone line 107. Telephone line 107 is connected to or routed to PSTN 111 which is connected to or routed to central office (CO) 113. With appropriate call routing and switching, CO 113 is connected to modem pool 115, of an on-line service provider, allowing user access to on-line services such as the Internet 117. For users who are subscribers to particular value-added services, modem pool 115 is connected to gateway 121, allowing a user at station 101 to take advantage of services such as internet call waiting as disclosed in the '587 patent.

During normal conditions, when computer 103 is not connected on-line with line 107, telephone instrument 109 can place and receive voice telephone calls using line 107. These voice calls can be to or from individuals within a local calling area, or the calls may be to or from individuals outside a local calling area, in which case the call will be routed through one or more toll switches. Regardless of whether a local or long-distance call, the call generally uses a series of connections and switches that are collectively referred to herein as the Public Switched Telephone Network (PSTN). The call can also connect to a wireless user over a wireless connection in which case the call may be routed through the network of a wireless service provider.

In one embodiment of the invention, the user at station 101 connects computer 103 to the Internet 117 by connecting to an on-line service provider using known access software and MODEM 105. This connection consists of the access software causing MODEM 105 to create an off hook condition for line 107 and placing a series of DTMF tones, corresponding to a telephone access number for the on-line service provider, on line 107 to CO 113 via PSTN 111. In response to the DTMF tones, CO 113 routes the call from station 101 to modem pool 115, which is associated with the telephone number of the on-line service provider.

Once computer 103 is connected to the on-line service provider over line 107, the user at station 101 is able to access a variety of on-line services, including access to the Internet 117. However, as previously discussed, without other value added services, the user may be unable to use and may need to disable certain traditional telephony services such as call waiting and call hold.

If the user subscribes to certain services, such as Internet Call Waiting, as described in the aforementioned '587 patent, a call to the user at station 101 from another party 119, while the user is on-line, can be forwarded to a server and the user at station 101 notified of the incoming call over the on-line connection. In response, the user may elect to take the call from the other party, using a Voice Over Internet Protocol (VOIP), or other protocol. It is also possible that the user at station 101 will desire to place a telephone call to party 119, while on-line with computer 103. To place this call, the user invokes a VOIP type service at computer 103 and places a call to party 119 through the on-line service provider. This results in a telephone connection between the user and the desired party. The user at station 101 uses a VOIP application at computer 103 to conduct the call.

Many call set-up procedures will connect a call from the user at station 101 to party 119, using a protocol such as Internet Protocol. Once the call is connected as a VOIP call, the bandwidth resources of line 107 are primarily used for exchange of voice packets to and from station 101 to party 119 through gateway 121.

Software running on computer 103 is typically used to exchange voice packets to and from station 101, though certain configurations may use a purely hardware implementation. The Microsoft NetMeeting Software application is an example of software running on computer 103 that can exchange voice packets using Internet Protocol.

Typically, voice packets (such as in a VOIP call) are converted to traditional telephone voice format at gateway 121. Gateway 121 provides a conversion or switch between data exchange protocols such as Internet Protocol and traditional voice telephony protocols, such as an amplitude modulated signal. Gateway 121 uses a combination of hardware and software to accomplish the switching and conversion of different signal types and protocols. The software is typically loaded in gateway 121 using some form of removable data media, and runs in a processor within gateway 121. The Cisco AS5300 Voice Gateway, available from Cicso Systems, Inc., 170 West Tasman Dr., San Jose, CA is an example of a gateway between circuit switched voice traffic and packet voice. The Cisco AS55300 allows routing of voice traffic across IP networks. However, the AS5300 Gateway and other similar systems do not provide a call hold feature, which is integral to the invention.

In the configuration of FIG. 1, voice packets share the available bandwidth with any other data packets on line 107. However, to preserve toll quality speech of a VOIP call, the application and hardware that is supporting a VOIP call may reserve certain minimum bandwidth to accommodate voice packets. This reserved bandwidth is generally not used during silent voice intervals. However, during active voice intervals, and depending on the maximum data rate of MODEM 105 coupled with the quality of line 107, it is possible that line 107 has very little excess bandwidth for non-voice transmission. For this reason, it may be desirable for the user at station 101 to place a VOIP call on hold during critical non-voice transfer periods and withhold voice packets from line 107, to ensure that full bandwidth on line 107 is available for non-voice services, without disconnecting the call between the user at station 101 and party 119. This is best accomplished by placing the call on hold at gateway 121 and prohibiting voice packets between station 101 and gateway 121 on line 107.

It is also possible that a more traditional reason for placing a call on hold arises, such as when the user at station 101 is engaged in a VOIP call with party 119 and a second call from party 123 comes in, which the user wants to take. In this circumstance, the user at station 101 wants to restrict or interrupt voice packets to/from party 119 (the first caller) on line 107 and wants voice packets to/from party 123 (the second caller) on line 107.

Normally, the user at station 101 does not want voice packets sent from station 101 to party 119 when the call with party 119 is placed on hold. However, there may be circumstances where the hold function is not symmetric, meaning that packets continue in one direction, but are blocked or interrupted in the return direction (e.g. blocked from party 119 to station 101, but allowed from station 101 to party 119).

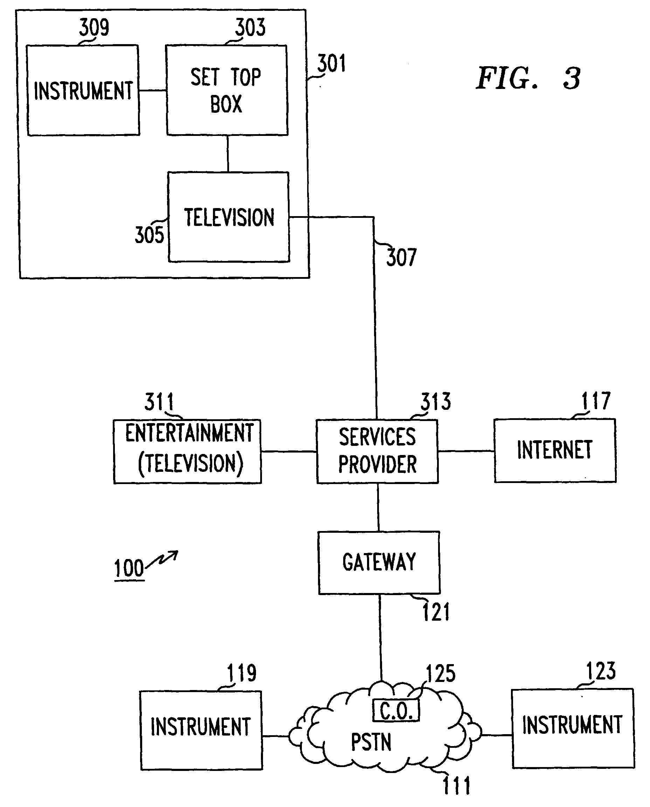

In a second embodiment, illustrated in FIG. 3, system 100 includes user station 301, which further includes telephone instrument 309, television 305 and set-top-box 303. Set-top-box 303 is connected to television 305 by a suitable connection such as a coaxial cable connection. Telephone instrument 309 is also connected to set-top-box 303 by a suitable connection such as a twisted pair telephone line with RJ-11 terminations.

System 100 further includes services provider 309, which is connected to set-top-box 303 by connection 307, which is typically coaxial cable or fiber optic line. Services provider 309 also connects to a variety of services such as entertainment broadcasting (television networks) 311, and the Internet 117. Services provider 309 also connects to gateway 121, thereby providing a connection to PSTN 111. Central Office (CO) 125, or PSTN 111 provides switching and call routing for telephone instruments 119 and 123.

In the embodiment illustrated in FIG. 3, a user at station 301 is able to receive traditional television or broadcast entertainment through set-top-box 303, and display that entertainment on television 305. Set-top-box 303 typically provides bi-directional communication between station 301 and services provider 309, allowing the user to select desired information / entertainment services for transmission to station 301 over connection 307. Set-top-box 303 is typically a multi-function processor with some form of memory storage, either volatile or non-volatile, and is able to provide the required interface between services provider 309 and the user at station 301 as well as controlling information exchange over connection 307. In an enhancement to typical broadcast entertainment transmitted from entertainment provider 311 to station 301, set-top-box 303 also provides telephony services for the user at station 301.

The user at station 301 is able to place and receive telephone calls on telephone instrument 309, which is connected to set-top-box 303. Instrument 309 is a telephone handset and with a connection to set-top-box 303. Set-top-box 303 provides any required signal conversion between the signal format of instrument 309 and the signal format on connection 307. Typically, the signal format on connection 307 is compatible with video transmission and is therefore a UHF/VHF amplitude and/or frequency modulated (AM/FM) analog signal carried over a coaxial cable. Telephony signals to/from instrument 309 are multiplexed with other signals on connection 307.

It is also possible that connection 307 is a combination of coaxial and fiber optic cable with appropriate interfaces, or that connection 307 is all fiber optic. Depending on the physical media of connection 307, the data transmission format over connection 307 may be analog, digital or a combination. It is also possible that various multiplexing formats are used on connection 307.

It can be thus be seen that set-top-box 303 in FIG. 3 performs many functions similar to computer 103 in FIG. 1 such as conversion between telephone voice signal formats and data formats. Accordingly, within the specification and the appended claims, set-top-box 303 is a computer. Similarly, when set-top-box 303 provides multi-media data services for a user at station 301 and set-top-box 303 is thus functioning as a multi-media computer, then any multi-media calls over connection 307 are multi-media-over-data protocol calls within the specification and the appended claims.

Embodiments of system 100 using a traditional desk-top computer and a set-top-box have been described. Other types of computing equipment, with processing capabilities that perform functions similar to the functions thus described for the set-top-box and the desk-top computer, are suitable as a computer connected to an on-line service with a data connection.

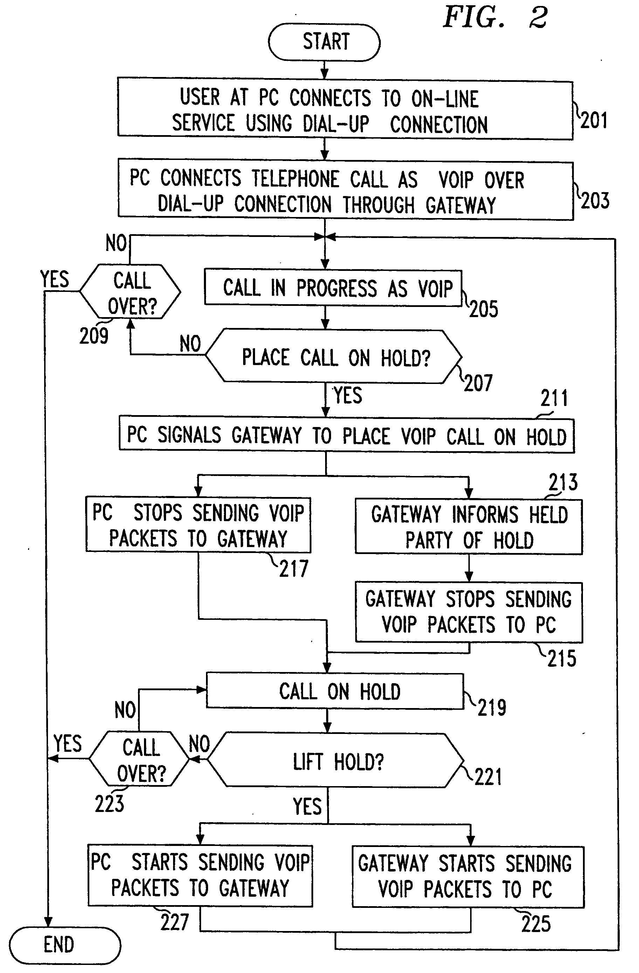

Having thus described embodiments of system 100, as illustrated in FIGS. 1 and 3, an embodiment for the method using the system is illustrated in FIG. 2, with reference to the system illustrated in FIG. 1. At step 201, a user at station 101 connects to an on-line service with a dial-up connection. This connection uses line 107 and connects to the on-line service using modem pool 115. Once connected, the user is able to use various on-line services and may access the Internet 117.

At step 203, the user at station 101 connects a telephone call using a voice-over-data-protocol (e.g., a VOIP call). The steps leading to connection of the telephone call are varied. The key feature is that the user at station 101 is connected to a party 119 over the telephone line connection 107 using a voice-over-data-protocol. The invention is particularly advantageous when the connection over line 107 is a dial-up connection from station 101 to modem pool 115 and gateway 121. However, any type of connection over line 107 is appropriate, such as a dedicated T-1 connection, Local Area Network (LAN), fiber optic line, wireless, or coax cable.

Once a telephone call between the user at station 101 and party 119 is established using a VOIP, the system conducts the call at step 205 and, at step 207, begins to monitor whether the user wants to place the call on hold.

At step 209, if the user does not want to place the call on hold, the system determines whether the call is over. If the call is over, the system exits.

If the call is not over and the user does not desire to place the call on hold, the system loops to step 205 and continues to monitor for a hold or end of call.

At step 211, if the system determines that the call is to be placed on hold, computer 103 signals to gateway 121, which places the call on hold.

At step 213, in response to the signal from computer 103, gateway 121 informs party 119 that the call is now on hold. This is important in the event that the user at station 101 does not inform party 119 and helps to avoid a hang-up by party 119 when they fail to get a response from the user at station 101.

At step 215, gateway 121 interrupts voice packets from gateway 121 through modem pool 115 to the user computer 103 at station 101. This has the effect of placing the call from party 119 to station 101 on hold. The call is not terminated and the off-hook condition to party 119 is maintained by gateway 121, thereby ensuring that CO 125 does not disconnect party 119 from the call.

At step 217, at the same time that gateway 121 is informing party 119 that the call is now on hold, computer 103 interrupts voice packets from station 101 to gateway 121. This has the effect of placing the call from station 101 to party 119 on hold.

Once voice packets between station 101 and party 119 are interrupted at steps 215 and 217, the call between station 101 and party 119 is on hold.

At step 219, a number of options are available. For example, a second call can be connected to the user, or line 107 can be reserved for data transmission. Similarly, at step 219, the call may be sent to voice messaging.

At step 221, the system determines whether the hold is lifted, and if not lifted, at step 223, the system determines whether the call is over. If the call is over, the system exits.

At step 225, if the hold is lifted, gateway 121 resumes transmission of voice packets to station 101, and at the same time at step 227, station 101 resumes transmission of voice packets to gateway 121.

Once transmission of voice packets is resumed at steps 225 and 227, the system loops to step 205, to continue the call.

At step 219, when a first voice call is on hold, one option is that a second voice call from party 123 is connected to station 101. This is accomplished when station 101 directs gateway 121 to place the call from party 123 on the line. In response to that direction, gateway 121 uses the on-line connection 107 to station 101 to send voice packets from party 123 to station 101 in the same manner that it sent voice packets from party 119 to station 101. In the embodiment of FIG. 1, the conversion between traditional telephony and voice packets occurs at gateway 121. Therefore, substitution of party 123 for party 119 at gateway 121 is a relatively simple matter of switching the calls, while maintaining an off-hook condition for the connection to the held party.

The methods or steps used to communicate or signal between the user at station 101 and gateway 121 are known. For example, gateway 121 may signal the user with known techniques such as a screen pop-up, or by injecting a tone or audio signal in the voice packet stream as it is heard by the user at station 101. The user may provide responses to gateway 121 through computer 103 using known techniques such as a keyboard, mouse or pointing device, touch screen or voice response. Other interaction techniques between the user and gateway 121 are appropriate as they become available, and the interaction techniques are not limited to those currently available or described herein.

Similarly, the invention has been described using Voice Over Internet Protocol (VOIP). Other voice/data protocols are currently known and it is expected that new protocols will be developed and implemented. The particular data protocol used to transfer voice over a data network is therefore not limiting.

The invention has been described with modem pool 115 and gateway 121. It is possible that these functions are performed by the same equipment or facility. It is also possible that the connection between station 101 and modem pool 115 is a purely digital connection. In this case, modems 105 and modem pool 115 may not be required, the call purely digital from computer 103 to gateway 121.

As previously described, computer 103 may further include multi-media components and software such as video and video conferencing software (e.g. Microsoft NetMeeting). It is also possible that the communication between station 101 and party 119 is a multi-media connection, in which case the call placed on hold is a multi-media-over-data-protocol call, not simply a voice-over-data-protocol call.

In the illustrations and description, parties 119 and 123 are described as using a traditional telephone instrument to conduct the telephone call. However, parties 119 and 123 may have computer and modem equipment similar to the equipment at station 101. In particular, parties 119 and 123 may have multi-media capabilities on their computers. In this manner, party 119 and station 101 may conduct a multi-media call using line 107 instead of a traditional voice telephony call. However, placing a multi-media call between station 101 and party 119 on hold will allow other activities, such as data transfer or taking a multi-media call from party 123. Thus, the hold activity applies equally to a multi-media call and a voice call. With a multi-media call, the information is typically exchanged between the users using a multi-media-over-data protocol such as H.323.

It is of course possible that the call placed on hold is a multi-media-over-data protocol call and the second call is a voice-over-data-protocol call, or vice versa.

Although illustrative preferred embodiments have been described herein in detail, it should be noted and will be appreciated by those skilled in the art that numerous variations may be made within the scope of this invention without departing from the principle of this invention and without sacrificing its chief advantages. As examples, the hold may be activated by party 119 rather than the user at station 101. Similarly, the actual call hold may be accomplished at computer 103 rather than at gateway 121. The terms and expressions have been used herein as terms of description and not terms of limitation. There is no intention to use the terms or expressions to exclude any equivalents of features shown and described or portions thereof and this invention should be defined in accordance with the claims which follow:

## Claims

1. A method for voice-over-data-protocol call management, the method comprising:
establishing a data connection between an on-line service and a computer, the computer adapted for voice-over-data-protocol;
conducting a voice-over-data-protocol call between the computer and a first party over the data connection; and
interrupting the call, whereby interrupting the call places the call on hold.

2. A method for call management according to claim 1, wherein interrupting the call includes interrupting the call at the on-line service.

3. A method for call management according to claim 1, wherein interrupting the call includes interrupting the call at the computer.

4. A method for call management according to claim 1, after interrupting the call, the method further comprising resuming the call.

5. A method for call management according to claim 1, wherein the voice-over-data-protocol includes voice-over-internet-protocol.

6. A method for call management according to claim 1, wherein the connection between the computer and the on-line service includes a dial-up connection.

7. A method for call management according to claim 1, wherein interrupting the call includes sending a hold signal from the computer to the on-line service.

8. A method for call management according to claim 1, wherein interrupting the call includes informing the first party that their call is on hold.

9. A method for call management according to claim 1, wherein interrupting the call includes sending a hold signal from the first party to the on-line service.

10. A method for call management according to claim 1, after interrupting the call, the method further comprising conducting a second voice-over-data-protocol call between the computer and a second party over the data connection.

11. A method for call management according to claim 1, after interrupting the call, the method further comprising sending the call to voice messaging.

12. A method for voice-over-data-protocol call management, the method comprising:
connecting a computer to an on-line service by a data connection, the computer adapted for voice-over-data-protocol;
establishing a voice-over-data-protocol call between the computer and a first party over the data connection; and
signaling the on-line service to interrupt the call, whereby interrupting the call places the call on hold.

13. A method for call management according to claim 12, wherein the voice-over-data-protocol includes voice-over-internet-protocol.

14. A method for call management according to claim 12, after interrupting the call, the method further comprising establishing a second voice-over-data-protocol call between the computer and a second party over the data connection.

15. A method for voice-over-data-protocol call management, the method comprising:
connecting an on-line service to a computer by a data connection, the computer and on-line service adapted for voice-over-data-protocol;
connecting a call between a first party and the computer over the data connection as a voice-over-data-protocol call; and
interrupting the call, whereby interrupting the call places the call on hold.

16. A method for call management according to claim 15, wherein the voice-over-data-protocol includes voice-over-internet-protocol.

17. A method for call management according to claim 15, after interrupting the call, the method further comprising connecting a second call between a second party and the computer over the data connection as a voice-over-data-protocol call.

18. A method for call management according to claim 15, after interrupting the call, the method further comprising sending the call to voice messaging.

19. A system for voice-over-data-protocol call management, the system comprising:
a computer, the computer adapted for a voice-over-data-protocol;
a connection; and
a gateway, the gateway adapted to connect to the computer with the connection, the gateway adapted for a voice-over-data-protocol call between the computer and a first party over the connection, the gateway interrupting the call, thereby placing the call on hold.

20. A system for voice-over-data-protocol call management according to claim 19, wherein the computer is a set-top-box.

21. A computer program product for use with a communication system, said computer program product comprising:
a computer usable medium having computer readable program code means embodied in the medium for voice-over-data-protocol call management, the computer program product having:
computer readable program code means for causing a computer to establish a data connection with an on-line service, the computer adapted for voice-over-data-protocol;
computer readable program code means for causing the computer to conduct a voice-over-data-protocol call with a first party over the data connection; and
computer readable program code means for interrupting the call, whereby interrupting the call places the call on hold.

22. An article of manufacture comprising:
a computer usable medium having computer readable program code means embodied therein for voice-ova-data-protocol call management, the computer readable program code means in said article of manufacture comprising:
computer readable program code means for causing a computer to establish a data connection with an on-line service, the computer adapted for voice-over-data-protocol;
computer readable program code means for causing the computer to conduct a voice-over-data-protocol call with a first party over the data connection; and
computer readable program code means for interrupting the call, whereby interrupting the call places the call on hold.

23. A computer program product for use with a communication system, said computer program product comprising:
a computer usable medium having computer readable program code means embodied in the medium for voice-over-data-protocol call management, the computer program product having:
computer readable program code means for causing a first computer to establish a data connection between an on-line service and a second computer, the second computer adapted for voice-over-data-protocol;
computer readable program code means for causing the second computer to conduct a voice-over-data-protocol call with a first party over the data connection; and
computer readable program code means for causing the first computer to interrupt the call, whereby interrupting the call places the call on hold.

24. An article of manufacture comprising:
a computer usable medium having computer readable program code means embodied therein for voice-over-data-protocol call management, the computer readable program code means in said article of manufacture comprising:
computer readable program code means for causing a first computer to establish a data connection between an on-line service and a second computer, the second computer adapted for voice-over-data-protocol;
computer readable program code means for causing the second computer to conduct a voice-over-data-protocol call with a first party over the data connection; and
computer readable program code means for causing the first computer to interrupt the call, whereby interrupting the call places the call on hold.

25. A program storage device readable by a machine, tangibly embodying a program of instructions executable by the machine to perform method steps for voice-over-data-protocol call management by said machine, said method steps comprising:
establishing a data connection between an on-line service and a computer, the computer adapted for voice-over-data-protocol;
conducting a voice-over-data-protocol call between the computer and a first party over the data connection; and
interrupting the call, whereby interrupting the call places the call on hold.

26. A method for multi-media-over-data-protocol call management, the method comprising:
establishing a data connection between an on-line service and a computer, the computer adapted for multi-media-over-data-protocol;
conducting a multi-media-over-data-protocol call between the computer and a first party over the data connection; and
interrupting the call, whereby interrupting the call places the call on hold.

27. A method for call management according to claim 26, wherein interrupting the call includes interrupting the call at the on-line service.

28. A method for call management according to claim 26, wherein interrupting the call includes interrupting the call at the computer.

29. A method for call management according to claim 26, after interrupting the call, the method further comprising resuming the call.

30. A method for call management according to claim 26, wherein the multi-media-over-data-protocol includes H.323 protocol.

31. A method for call management according to claim 26, wherein the connection between the computer and the on-line service includes a dial-up connection.

32. A method for call management according to claim 26, wherein interrupting the call includes sending a hold signal from the computer to the on-line service.

33. A method for call management according to claim 26, wherein interrupting the call includes informing the first party that their call is on hold.

34. A method for call management according to claim 26, wherein interrupting the call includes sending a hold signal from the first party to the on-line service.

35. A method for call management according to claim 26, after interrupting the call, the method further comprising conducting a second multi-media-over-data-protocol call between the computer and a second party over the data connection.

36. A method for call management according to claim 26, after interrupting the call, the method further sending the call to messaging.

37. A method for multi-media-over-data-protocol call management, the method comprising:
connecting a computer to an on-line service by a data connection, the computer adapted for multi-media-over-data-protocol;
establishing a multi-media-over-data-protocol call between the computer and a first party over the data connection; and
signaling the on-line service to interrupt the call, whereby interrupting the call places the call on hold.

38. A method for call management according to claim 37, wherein the multi-media-over-data-protocol includes H.323 protocol.

39. A method for call management according to claim 37, after interrupting the call, the method further comprising establishing a second multi-media-over-data-protocol call between the computer and a second party over the data connection.

40. A method for call management according to claim 37, after interrupting the call, the method further comprising sending the call to messaging.

41. A method for multi-media-over-data-protocol call management, the method comprising:
connecting an on-line service to a computer by a data connection, the computer and on-line service adapted for multi-media-over-data-protocol;
connecting a call between a first party and the computer over the data connection as a multi-media-over-data-protocol call; and
interrupting the call, whereby interrupting the call places the call on hold.

42. A method for call management according to claim 41, wherein the multi-media-over-data-protocol includes H.323 protocol.

43. A method for call management according to claim 41, after interrupting the call, the method further comprising connecting a second call between a second party and the computer over the data connection as a multi-media-over-data-protocol call.

44. A method for call management according to claim 41, after interrupting the call, the method further comprising sending the call to messaging.

45. A system for multi-media-over-data-protocol call management, the system comprising:
a computer, the computer adapted for multi-media-over-data-protocol;
a connection; and
a gateway, the gateway adapted to connect to the computer with the connection, the gateway adapted for a multi-media-over-data-protocol call between the computer and a first party over the connection, the gateway interrupting the call, thereby placing the call on hold.

46. A system for multi-media-over-data-protocol call management according to claim 45, wherein the computer is a set-top-box.

47. A computer program product for use with a communication system, said computer program product comprising:
a computer usable medium having computer readable program code means embodied in the medium for multi-media-over-data-protocol call management, the computer program product having:
computer readable program code means for causing a computer to establish a data connection with an on-line service, the computer adapted for multi-media-over-data-protocol;
computer readable program code means for causing the computer to conduct a multi-media-over-data-protocol call with a first party over the data connection; and
computer readable program code means for interrupting the call, whereby interrupting the call places the call on hold.

48. An article of manufacture comprising:
a computer usable medium having computer readable program code means embodied therein for multi-media-over-data-protocol call management, the computer readable program code means in said article of manufacture comprising:
computer readable program code means for causing a computer to establish a data connection with an on-line service, the computer adapted for multi-media-over-data-protocol;
computer readable program code means for causing the computer to conduct a multi-media-over-data-protocol call with a first party over the data connection; and
computer readable program code means for interrupting the call, whereby interrupting the call places the call on hold.

49. A computer program product for use with a communication system, said computer program product comprising:
a computer usable medium having computer readable program code means embodied in the medium for multi-media-over-data-protocol call management, the computer program product having:
computer readable program code means for causing a first computer to establish a data connection between an on-line service and a second computer, the second computer adapted for multi-media-over-data-protocol;
computer readable program code means for causing the second computer to conduct a multi-media-over-data-protocol call with a first party over the data connection; and
computer readable program code means for causing the first computer to interrupt the call, whereby interrupting the call places the call on hold.

50. An article of manufacture comprising:
a computer usable medium having computer readable program code means embodied therein for multi-media-over-data-protocol call management, the computer readable program code means in said article of manufacture comprising:
computer readable program code means for causing a first computer to establish a data connection between an on-line service and a second computer, the second computer adapted for multi-media-over-data-protocol;
computer readable program code means for causing the second computer to conduct a multi-media-over-data-protocol call with a first party over the data connection; and
computer readable program code means for causing the first computer to interrupt the call, whereby interrupting the call places the call on hold.

51. A program storage device readable by a machine, tangibly embodying a program of instructions executable by the machine to perform method steps for multi-media-over-data-protocol call management by said machine, said method steps comprising:
establishing a data connection between an on-line service and a computer, the computer adapted for multi-media-over-data-protocol;
conducting a multi-media-over-data-protocol call between the computer and a first party over the data connection; and
interrupting the call, whereby interrupting the call places the call on hold.
